# EUROPEAN PATENT SPECIFICATION

(11) **EP 3 489 722 B1**
(45) Date of publication and mention of the grant of the patent: **28.04.2021**
(21) Application number: 17830744.3
(22) Date of filing: 09.06.2017
(51) Int. Cl.: G01T 1/20, C09K 11/78, G01T 1/16, G01T 1/167, G01T 1/02, G01T 1/202

(54) **RADIATION MONITOR**
STRAHLUNGSMONITOR
APPAREIL DE MESURE DE RAYONNEMENT

(30) Priority: 20.07.2016 JP 2016142651
(43) Date of publication of application: 29.05.2019
(73) Proprietor: Hitachi, Ltd., Tokyo 100-8280 (JP)
(72) Inventor: HATAKEYAMA, Shuichi, Tokyo 100-8280 (JP); UENO, Katsunori, Tokyo 100-8280 (JP); TADOKORO, Takahiro, Tokyo 100-8280 (JP); UENO, Yuichiro, Tokyo 100-8280 (JP); NAGUMO, Yasushi, Tokyo 100-8280 (JP); OKADA, Kouichi, Tokyo 100-8280 (JP)
(74) Representative: MERH-IP Matias Erny Reichl Hoffmann Patentanwälte PartG mbB
(86) International application number: PCT/JP2017/021489
(87) International publication number: WO 2018/016224

(56) References cited:
- EP-A1- 0 604 947
- JP-A- H0 915 395
- JP-A- 2000 304 865
- JP-A- 2001 051 100
- JP-A- 2001 051 100
- JP-A- 2014 032 170
- JP-A- 2014 032 170
- JP-A- 2015 040 226
- JP-A- 2016 114 392
- JP-A- 2016 114 392

## Description

### Technical Field

The present invention relates to a radiation monitor that uses an optical fiber.

### Background Art

In related art, an ionization chamber, a GM counter (Geiger-Muller counter), a scintillation detector or a semiconductor detector is used as a radiation monitor that measures a dose rate of radiation. The semiconductor detector is applied to the radiation monitor that can perform measurement in a low dose rate environment particularly. The radiation monitor that uses the semiconductor detector is used in, for example, nuclear power generation plants or nuclear fuel reprocessing facilities, medical facilities using radioactive isotopes, industrial facilities, accelerator facilities for research, general environment monitoring devices or the like. The radiation monitor that uses the semiconductor detector uses electron-hole pairs generated by radiation incidence, and derives the dose rate based on a counting rate of electric pulses generated by voltage applied to a semiconductor.

However, since the semiconductor detector applies high voltage, there is risk of explosion when concentration of hydrogen in the air is high. Further, since an electric pulse signal generated from the semiconductor is used, there is a possibility of transmitting electric noise to other measuring instruments and receiving electric noise therefrom.

An optical fiber typed radiation detector has been served as a detector that can inhibit electric noise and explosion (for example, Patent Document 1 and Patent Document 2) . Since the optical fiber typed radiation detector measures the dose rate by transmitting a plurality of photons generated with respect to incident radiation by an optical fiber, it is unnecessary to supply electricity to a radiation detection unit and reception and transmission of the electric noise can be inhibited.

### Prior Art Literature

### Patent Literature

Patent Document 1: JP-A-2001-56381
Patent Document 2: JP-A-2016-114392
Patent Document 3: JP H09 15395 A
Patent Document 4: EP 0604947 A1
Patent Document 5: JP 2014 032170 A
Patent Document 6: JP 2001 051100 A

### Summary of Invention

### Technical Problem

In the related-art technique described in Patent Document 1 , since a scintillation fiber is used to detect radiation, it is difficult to perform measurement with high sensitivity in a low dose rate environment. This is attributed to the fact that low density materials such as polystyrene (density: 1.05 g/cm³) are used in a core unit of the scintillation fiber that interacts with the radiation, and that the absorption efficiency of polystyrene to the radiation is low. Further, since light emission efficiency of the scintillation fiber is lower compared with that of a commonly used NaI (TI) scintillator, sufficient sensitivity cannot be achieved. Even when bismuth germanate BGO, lead tungstate PWO or the like that have a high density, as existing scintillator crystal, are applied to the radiation detection unit, sufficient sensitivity cannot be achieved due to the low light emission efficiency of the scintillator. Further, since the scintillation fiber, the BGO and the PWO have light emission wavelength bands from 300 nm to 500 nm, transmission efficiency in the optical fiber is low and it is difficult to measure the dose rate of radiation with high sensitivity in a low dose rate environment.

Further, in the related-art technique described in Patent Document 2, the dose rate of radiation is converted based on a count rate of each photon generated by a light emission unit with respect to the incident radiation. However, since light emission efficiency of photons in the light emission unit is low, it has been desired to ensure measurement performance in a low dose rate environment. Therefore, it is difficult to measure the dose rate of radiation with a high sensitivity in a low dose rate environment where a count rate of the incident radiation is low. Accordingly, in the related-art techniques described above, there have been problems that in a low dose rate environment, particularly, absorption efficiency with respect to the incident radiation is low and the light emission efficiency of photons having a light emission wavelength with high transmission efficiency in the optical fiber is low.

The inventors of the invention have proposed in Patent Document 2 that the light emission unit that emits light of an intensity corresponding to a dose rate of the incident radiation is formed of, for example, a light-transmitting material such as transparent yttrium-aluminum-garnet (garnet structured crystal formed from a composite oxide (Y₃Al₃O₁₂) of yttrium and aluminum) as a base material, and rare-earth elements contained in the light-transmitting material such as ytterbium (Yb), neodymium (Nd), cerium (Ce) and praseodium (Pr). However, it has been desired to further improve the detection sensitivity of the radiation detector that uses the optical fiber. Further, patent documents 3, 4, 5 and 6 describe further radiation monitoring devices.

An object of the invention is to provide a radiation monitor that can improve detection sensitivity of a radiation detector that uses an optical fiber.

### Solution to Problem

The above object is achieved by the subject matter according to claim 1. Preferred aspects are described by the dependent claims.

Other aspects of the invention will be described in the embodiments to be described later.

### Advantageous Effect

According to the invention, the detection sensitivity of the radiation detector that uses the optical fiber is improved.

### Brief Description of Drawings

Fig. 1 is a block diagram showing a radiation monitor according to a first embodiment.
Fig. 2 is a schematic enlarged sectional view of a radiation detection unit of the radiation monitor in Fig. 1.
Fig. 3 is a graph illustrating a measurement result of a light emission wavelength spectrum of a fluorescent body in the radiation detection unit in Fig. 2.
Fig. 4 is a schematic view showing an example of a relationship between a dose rate of radiation and a count rate of a single photon.
Fig. 5 is a schematic view showing an example of light generation when radiation is incident on the fluorescent body.
Fig. 6 is a schematic view showing an example of an electric pulse signal in a case where it is assumed that an output of a photodetector is measured.
Fig. 7 is a schematic view showing one usage example of the radiation monitor in Fig. 1.
Fig. 8 is a schematic view showing another usage example of the radiation monitor in Fig. 1.
Fig. 9 is a schematic block diagram showing a radiation monitor according to a second embodiment.

### Description of Embodiments

Embodiments for implementing the invention will be described in detail with reference to the drawings as appropriate.

### (First Embodiment)

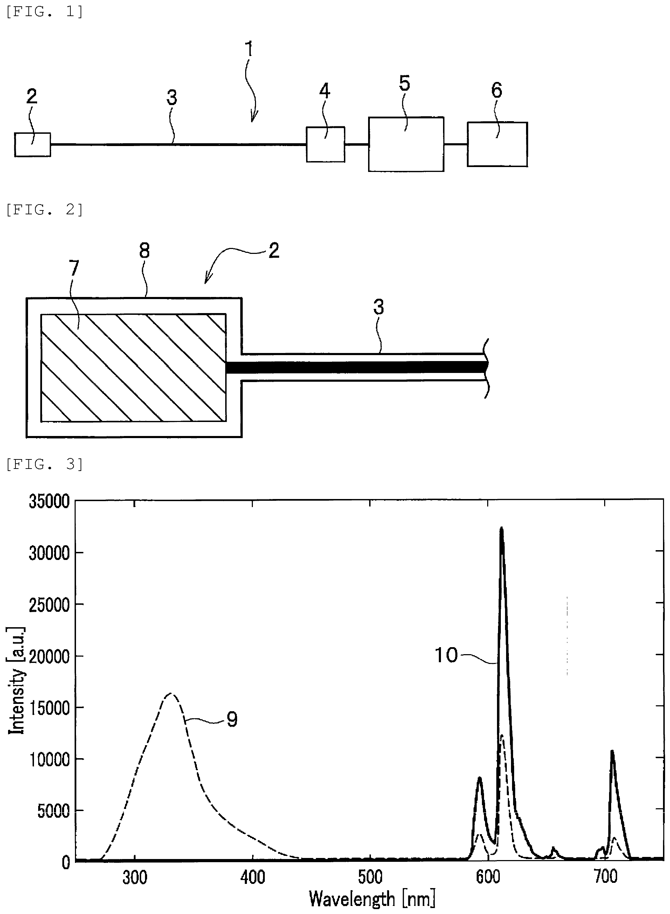

Fig. 1 is a block diagram showing a radiation monitor 1 according to a first embodiment. The radiation monitor 1 includes a radiation detection unit 2, an optical fiber 3, a photodetector 4, a counter 5 and an analyzer/display unit 6, as shown schematically in Fig. 1. Incidentally, examples of radiation that can be measured by the radiation monitor 1 include electromagnetic waves such as an X ray and a γ ray, and particle rays such as an α ray, a β ray and a neutron ray.

Fig. 2 is a schematic enlarged sectional view of the radiation detection unit 2 of the radiation monitor 1 in Fig. 1. As shown in Fig. 2, the radiation detection unit 2 is an element that includes a housing 8 and a fluorescent body 7 that emits light of an intensity corresponding to a dose rate of incident radiation. That is, in the present embodiment, a light emission unit (for example, the fluorescent body 7) is housed in the housing 8 of the radiation monitor 1.

The composition of the fluorescent body 7 is represented by General Formula (1) described below. In the formula, A and B are selected from at least one element of praseodymium (Pr), neodymium (Nd), samarium (Sm), europium (Eu), gadolinium (Gd), terbium (Tb), dysprosium (Dy), holmium (Ho), erbium (Er), thulium (Tm) and ytterbium (Yb), which are included in the rare-earth group having 4f-4f electronic transitions.

General Formula (1) ATaO₄:B

Furthermore, the concentration of the additive B contained in the fluorescent body 7 is 1×10⁻³ by mass to 30% by mass with respect to a total mass of the composition represented by General Formula (1) . Accordingly, it is possible to obtain a high light emission intensity of the additive B.

As for a manufacturing method of the fluorescent body 7, there is no particular limitation as long as the composition represented by General Formula (1) can be grown. For example, a floating zone method, the Czochralski method (a pulling up method), a micro pulling down method or the Bridgeman method can be adopted.

Accordingly, ATaO₄ which is a high-density base material and B which is the additive, of the fluorescent body 7, contain at least one of the rare-earth elements having 4f-4f electronic transitions, so that energy given to the base material by radiation incidence is used for excitation energy of the additive with high efficiency.

That is, the fluorescent body 7 has the following characteristics.
(1) By using ATaO₄ as the high-density base material, the absorption efficiency of the base material with respect to the radiation is improved.
(2) The base material A and the additive B which is an activator each contain a rare-earth element having 4f-4f electronic transitions, so that energy given to the base material is used for excitation of the additive with high efficiency. For this reason, the base material A and the additive B which is the activator can improve the light emission efficiency of light having 500 nm to 700 nm with high transmission efficiency in the optical fiber, and the detection sensitivity can be improved.

Fig. 3 is a graph illustrating a measurement result of a light emission wavelength spectrum of the fluorescent body 7 of the radiation detection unit 2 in Fig. 2. Fig. 3 shows a measurement result of wavelength spectrums of two fluorescent bodies, one of which serves as a comparative example in which an additive Eu (0.1%) having 4f-4f electronic transitions is contained in YTaO₄ which is a high-density base material without 4f-4f electronic transitions, and the other of which serves as an embodiment in which an additive Eu (0.1%) having 4f-4f electronic transitions is contained in GdTaO₄ which is a high-density base material having 4f-4f electronic transitions. As shown in Fig. 3, for the wavelength spectrum of YTaO₄:Eu (0.1%) which is the comparative example, a fluorescence peak 9 of light emitted from the base material (YTaO₄) is dominant in the wavelength range of 250 nm to 450 nm. Meanwhile, for the fluorescent body 7 using GdTaO₄:Eu (0.1%) which is the embodiment, light emitted from the base material (GdTaO₄) is not confirmed in the wavelength range of 250 nm to 450 nm and a fluorescent peak of the additive Eu is dominant. This is because Gd and Eu both contain a rare-earth element having 4f-4f electronic transitions so that energy given to the base material is used for the excitation energy of Eu with high efficiency.

Accordingly, the fluorescent body 7 includes ATaO₄ which is the high-density base material represented by General Formula (1), and A and B contain a rare-earth element having 4f-4f electronic transitions, so that it is possible to improve light emission efficiency of light having 500 nm to 800 nm with high transmission efficiency in the optical fiber 3. Therefore, the radiation monitor 1 can improve the detection sensitivity thereof. As described above, A and B are selected from Pr, Nd, Sm, Eu, Gd, Tb, Dy, Ho, Er, Tm and Yb which are included in the rare-earth group having 4f-4f electronic transitions, and thus the light emission efficiency of the additive can be improved. Further, it is preferred that A and B are selected from Nd, Sm, Eu, Gd, Tb, Dy, Ho, Er, Tm and Yb as described above. Accordingly, it is possible to improve the light emission efficiency of light having 500 nm or more with high transmission efficiency in the optical fiber 3. It is further preferred that A and B are selected from Sm, Eu, Gd, Tb, and Dy. Accordingly, it is possible to improve the light emission efficiency of light having 500 nm to 800 nm with high transmission efficiency in the optical fiber 3.

Since the fluorescent body 7 has a long decay time constant of 1 µs or longer, a cluster of single photons transmitted from the optical fiber 3 can be resolved into single photons one by one more effectively.

Incidentally, the fluorescent body 7 that has a decay time constant less than 1 µs can also be used.

The housing 8 is a container that houses the fluorescent body 7. The material forming the housing 8 is not particularly limited as long as radiation of a measurement target can be transmitted. For example, aluminum or the like can be adopted.

The optical fiber 3 is connected to the radiation detection unit 2 and transmits light emitted from the fluorescent body 7. The optical fiber 3 is connected to the radiation detection unit 2 and the photodetector 4 to be described later. Examples of a material forming the optical fiber 3 include quartz, plastic or the like.

The photodetector 4 is connected to the optical fiber 3, and is a detector that converts photons transmitted from the optical fiber into electric pulse signals. The photodetector 4 is connected to the optical fiber 3 and the counter 5 to be described later. A photomultiplier tube, an avalanche photodiode or the like, for example, can be adopted as the photodetector 4. By using the photomultiplier tube or the like, a single photon can be detected as one current pulse signal that is current-amplified.

The counter 5 is connected to the photodetector 4, and is a unit that counts the electric pulse signals input from the photodetector 4. The counter 5 is connected to the photodetector 4 and the analyzer/display unit 6 to be described later. A digital signal processor or the like, for example, can be adopted as the counter 5.

The analyzer/display unit 6 is connected to the counter 5, and is a unit that converts a count rate of the electric pulse signals counted by the counter 5 into a dose rate of radiation and displays a value of the dose rate. The analyzer/display unit 6 includes a memory unit that stores a database which associates the count rate of the electric pulse signals with the dose rate of radiation, an arithmetic unit that uses the database and converts the count rate of the electric pulse signals into the dose rate of radiation, and a display unit that displays a converted dose rate of radiation. A personal computer having the functions described above or the like, for example, can be adopted as the analyzer/display unit 6. Incidentally, "count rate of electric pulse signals" in the description means the number of electric pulse signals measured per unit time.

Different from the related-art method of converting a count rate of γ ray into a dose rate of radiation, in the invention, the dose rate of radiation is converted from the count rate of the single photons contained in a plurality of photons generated by the fluorescent body 7 due to incidence of the γ ray. Incidentally, "single photon" in the description refers to each photon that is generated at an interior part of the fluorescent body due to incidence of radiation.

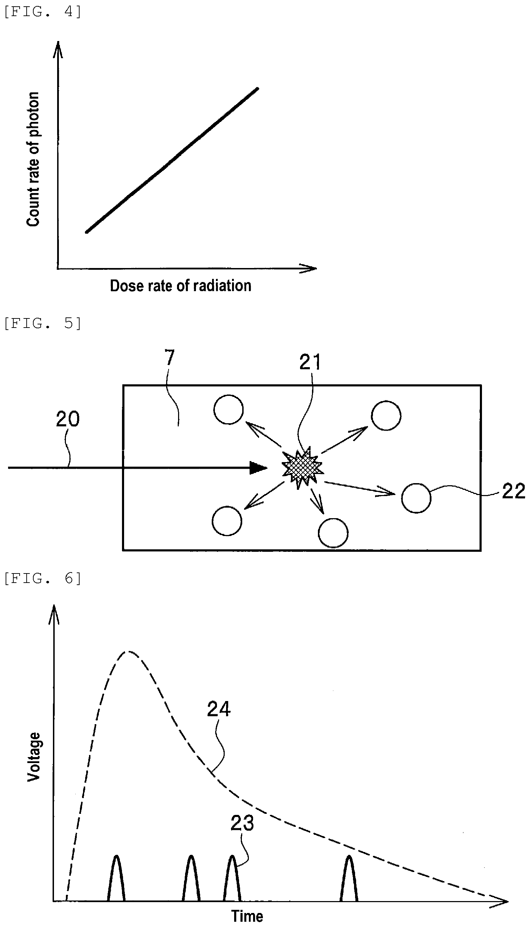

Fig. 4 is a schematic view showing an example of a relationship between the dose rate of radiation and the count rate of single photons. As shown in Fig. 4, the dose rate of radiation can be obtained as long as the count rate of the single photons can be measured. Therefore, the dose rate of radiation can be converted from the count rate of the measured electric pulse signals by using the relationship.

Next, the operation of the radiation monitor 1 will be described.

Fig. 5 is a schematic view showing an example of light generation when radiation 20 is incident on the fluorescent body 7. In Fig. 5, when the radiation 20 is incident on the fluorescent body 7, an interaction 21 occurs. With the interaction 21, a plurality of single photons 22 are generated.

Fig. 6 is a schematic view showing an example of an electric pulse signal 23 in a case where it is assumed that the output of the photodetector is measured. Generally, when a beam of the radiation 20 is incident on the fluorescent body 7, the plurality of single photons 22 are generated and are measured as an electric pulse signal 24 by using the photodetector 4. Meanwhile, in the present embodiment, each single photon 22 transmitted from the optical fiber 3 is measured by the photodetector 4 . As shown in Fig. 6, the single photon 22 is measured by the photodetector 4 as the electric pulse signal 23 that has a time width of approximate 2 ns.

Accordingly, the fluorescent body 7 of the radiation monitor 1 includes ATaO₄ which is the high-density base material represented by General Formula (1), and A and B contain at least one rare-earth element having 4f-4f electronic transitions. In the radiation monitor 1, the count rate of the single photons 22 transmitted over the optical fiber 3 is measured, so that absorption efficiency in the fluorescent body 7 with respect to the radiation 20 is improved and light emission efficiency of light having 500 nm to 800 nm with high transmission efficiency in the optical fiber 3 is improved, and thus the detection sensitivity can be improved.

Next, a preferred usage example of the radiation monitor 1 will be described.

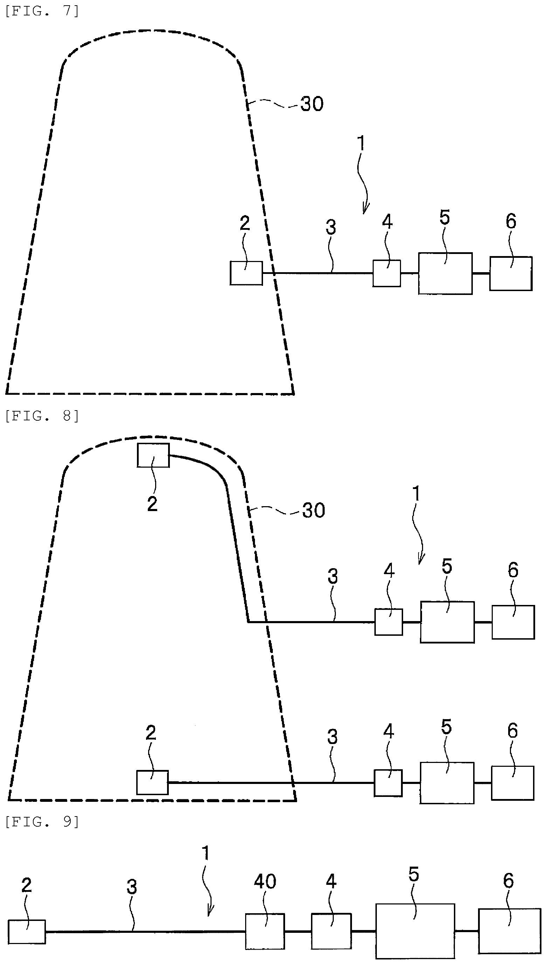

Fig. 7 is a schematic view showing a usage example of the radiation monitor in Fig. 1. As shown in Fig. 7, the radiation detection unit 2 is disposed within an area to be measured 30, and the photodetector 4 that is connected to the optical fiber 3, the counter 5 and the analyzer/display unit 6 are disposed outside of the area to be measured. In this way, the dose rate of radiation can be measured with high sensitivity in a low dose rate environment such as in a reactor building or a reactor containment vessel.

Fig. 8 is a schematic view showing another usage example of the radiation monitor in Fig. 1. As shown in Fig. 8, at least two or more radiation detection units 2 are disposed inside the area to be measured 30, so that a dose rate distribution in the area to be measured 30 can be measured with high sensitivity. According to the effects, the radiation monitor (monitor/measurement method) can be applied to nuclear power generation plants or nuclear fuel reprocessing facilities, medical facilities using radioactive isotopes, industrial facilities, accelerator facilities for research, general environment monitoring devices or the like.

### (Second Embodiment)

A radiation monitor according to a second embodiment of the invention will be described with reference to Fig. 9. In the following embodiment that is substituted for the first embodiment, the same parts are denoted by the same reference numerals, and only different parts will be described. Therefore, the parts omitted in the description are the same with that of the first embodiment.

Fig. 9 is a schematic block diagram showing a radiation monitor 1 according to the second embodiment. The schematic block diagram showing the second embodiment is different in that there is a wavelength filter 40. Incidentally, since the radiation detection unit 2, the optical fiber 3 and the photodetector 4 are the same as those in the first embodiment, detailed description thereof is omitted.

The wavelength filter 40 is connected to the optical fiber 3 and the photodetector 4, and is a unit that transmits wavelength within a predetermined range corresponding to the photons transmitted from the optical fiber 3. Thus, the wavelength filter 40 has a function of transmitting wavelength of the predetermined range, so that wavelength of emitted light generated by those other than the additive at the fluorescent body 7 can be removed. Therefore, the dose rate of radiation can be accurately measured in a low dose rate environment. Incidentally, "wavelength within a predetermined range" in the description indicates a range of wavelength that can be transmitted, and the photons are controlled by only transmitting photons with determined wavelength.

The radiation monitor 1 according to the second embodiment is a radiation monitor that measures a dose rate, and includes: a fluorescent body 7 represented by General Formula (1)described below; a radiation detection unit 2 including the fluorescent body 7; an optical fiber 3 that transmits photons generated from the radiation detection unit 2; a wavelength filter 40 that transmits wavelength within a predetermined range corresponding to the transmitted photons; a photodetector 4 that converts each photon transmitting through the wavelength filter 40 into an electric pulse signal; a counter 5 that counts the electric pulse signal; and an analyzer/display unit 6 (analysis unit) that determines a dose rate of radiation based on a count of the electric pulse signal according to a relationship between the dose rate of radiation and a count rate of single photons.

General Formula (1) ATaO₄:B

(in the formula, A and B are selected from at least one element of Pr, Nd, Sm, Eu, Gd, Tb, Dy, Ho, Er, Tm and Yb which are included in the rare-earth element group having 4f-4f electronic transitions)

According to the present embodiment, detection sensitivity of the radiation detector that uses the optical fiber can be improved, and the measurement time in a low dose rate environment can be shortened.

### Description of Reference Numerals

- 1: radiation monitor
- 2: radiation detection unit
- 3: optical fiber
- 4: photodetector
- 5: counter
- 6: analyzer/display unit (analysis unit)
- 7: fluorescent body
- 8: housing
- 9: fluorescence peak of YTaO₄:Eu(0.1%)
- 10: fluorescence peak of GdTaO₄:Eu(0.1%)
- 20: radiation
- 21: interaction
- 22: single photon
- 23: electric pulse signal
- 24: electric pulse signal
- 30: area to be measured
- 40: wavelength filter

## Claims

1. A radiation monitor (1) configured to measure a dose rate, comprising:
a radiation detection unit (2) including a fluorescent body;
an optical fiber (3) for transmitting photons generated from the radiation detection unit (2);
a photodetector (4) for converting each of the transmitted photons into an electric pulse signal;
a counter (5) for counting the electric pulse signal; and
an analysis unit (6) configured to determine a dose rate of radiation based on a count of the electric pulse signal according to a relationship between the dose rate of radiation and a count rate of single photons,
**characterized in that**
the fluorescent body (7) is represented by General Formula (1) described below, wherein
in the formula, A and B are selected from at least one element in the rare-earth element group having 4f-4f electronic transitions, and
A and B in the General Formula (1) are contained 1×10⁻³ by mass to 30% by mass with respect to a total mass of the fluorescent body.
General Formula (1) ATaO₄:B

2. The radiation monitor according to claim 1, wherein A and B in General Formula (1) are selected from at least one element of Sm, Eu, Gd, Tb and Dy which are included in the rare-earth group having 4f-4f electronic transitions.

3. The radiation monitor according to claim 1, wherein the fluorescent body (7) has a decay time constant of 1 µs or longer.

4. The radiation monitor according to claim 1, further comprising:
a wavelength filter (40) that transmits wavelength within a predetermined range of the transmitted photons,
wherein the photodetector (4) converts each photon transmitting through the wavelength filter (40) into an electric pulse signal.

5. The radiation monitor according to claim 1, wherein at least two or more radiation detection units (2) are disposed to measure a dose rate within an area to be measured.

6. The radiation monitor according to any one of claims 1 to wherein the radiation detection unit (2) is disposed inside the area to be measured, and the photodetector (4), the counter (5) and the analysis unit are disposed outside of the area to be measured.

## Patentansprüche

1. Strahlungsüberwachungsgerät (1), das konfiguriert ist, eine Dosisrate zu messen, wobei das Strahlungsüberwachungsgerät Folgendes umfasst:
eine Strahlungsdetektionseinheit (2), die einen fluoreszierenden Körper enthält;
eine Lichtleitfaser (3) zum Übertragen von Photonen, die von der Strahlungsdetektionseinheit (2) erzeugt werden;
einen Photodetektor (4) zum Umsetzen jedes übertragenen Photons in ein elektrisches Impulssignal;
einen Zähler (5) zum Zählen der elektrischen Impulssignale; und
eine Analyseeinheit (6), die konfiguriert ist, eine Dosisrate der Strahlung auf der Basis einer Anzahl der elektrischen Impulssignale in Übereinstimmung mit einer Beziehung zwischen der Dosisrate der Strahlung und einer Zählrate einzelner Photonen zu ermitteln,
**dadurch gekennzeichnet, dass**
der fluoreszierende Körper (7) durch eine allgemeine Formel (1) dargestellt wird, die nachfolgend beschrieben wird, wobei
in der Formel A und B aus wenigstens einem Element in der Elementgruppe der Seltenen Erden, die 4f-4f-Elektronenübergänge haben, ausgewählt werden, und
A und B in der allgemeinen Formel (1) mit einem Masseanteil im Bereich von 1 × 10⁻³ bis 30 % in Bezug auf eine Gesamtmasse des fluoreszierenden Körpers enthalten sind.
Allgemeine Formel (1): ATaO₄: B

2. Strahlungsüberwachungsgerät nach Anspruch 1, wobei A und B in der allgemeinen Formel (1) aus wenigstens einem Element aus Sm, Eu, Gd, Tb und Dy ausgewählt werden, die in der Gruppe der Seltenen Erden, die 4f-4f-Elektronenübergänge haben, enthalten sind.

3. Strahlungsüberwachungsgerät nach Anspruch 1, wobei der fluoreszierende Körper (7) eine Zerfallskonstante von 1 µs oder länger hat.

4. Strahlungsüberwachungsgerät nach Anspruch 1, das ferner Folgendes umfasst:
ein Wellenlängenfilter (40), das Wellenlängen in einem festgelegten Bereich der übertragenen Photonen hindurchlässt,
wobei der Photodetektor (4) jedes Photon, das durch das Wellenlängenfilter (40) hindurchgelassen wurde, in ein elektrisches Impulssignal umsetzt.

5. Strahlungsüberwachungsgerät nach Anspruch 1, wobei wenigstens zwei oder mehr Strahlungsdetektionseinheiten (2) angeordnet sind, um eine Dosisrate in einem zu vermessenden Bereich zu messen.

6. Strahlungsüberwachungsgerät nach einem der Ansprüche 1 bis 5,
wobei die Strahlungsdetektionseinheit (2) innerhalb des zu vermessenden Bereichs angeordnet ist und wobei der Photodetektor (4), der Zähler (5) und die Analyseeinheit außerhalb des zu vermessenden Bereichs angeordnet sind.

## Revendications

1. Appareil de mesure de rayonnement (1) configuré pour mesurer un taux de dose, comprenant :
une unité de détection de rayonnement (2) incluant un corps fluorescent ;
une fibre optique (3) pour transmettre des photons générés depuis l'unité de détection de rayonnement (2) ;
un photodétecteur (4) pour convertir chacun des photons transmis en un signal électrique puisé ;
un compteur (5) pour compter le signal électrique puisé ; et
une unité d'analyse (6) configurée pour déterminer un taux de dose d'un rayonnement sur la base d'un décompte du signal électrique pulsé en accord avec une relation entre le taux de dose de rayonnement et un taux de décompte de photons individuels,
**caractérisé en ce que**
le corps fluorescent (7) est représenté par la formule générale (1) décrite ci-après, dans laquelle
dans la formule, A et B sont sélectionnés à partir d'au moins un élément dans le groupe des éléments des terres rares ayant des transitions électroniques 4f-4f, et
A et B dans la formule générale (1) sont contenus à raison de 1×10⁻³ en masse à 30 % en masse par rapport à une masse totale du corps fluorescent :
formule générale (1) ATaO₄:B.

2. Appareil de mesure de rayonnement selon la revendication 1, dans lequel A et B dans la formule générale (1) sont sélectionnés parmi au moins un élément Sm, Eu, Gd, Tb et Dy qui sont inclus dans le groupe des terres rares ayant des transitions électroniques 4f-4f.

3. Appareil de mesure de rayonnement selon la revendication 1, dans lequel le corps fluorescent (7) présente une constante de temps de décroissance de 1 µs ou plus.

4. Appareil de mesure de rayonnement selon la revendication 1, comprenant en outre :
un filtre de longueur d'onde (40) qui transmet une longueur d'onde à l'intérieur d'une plage prédéterminée des photons transmis,
dans lequel le photodétecteur (4) convertit chaque photon transmis à travers le filtre de longueur d'onde (40) en un signal électrique pulsé.

5. Appareil de mesure de rayonnement selon la revendication 1, dans lequel au moins deux ou plusieurs unités de détection de rayonnement (2) sont disposées pour mesurer un taux de dose à l'intérieur d'une zone à mesurer.

6. Appareil de mesure de rayonnement selon l'une quelconque des revendications 1 à 5, dans lequel l'unité de détection de rayonnement (2) est disposée à l'intérieur de la zone à mesurer, et le photodétecteur (4), le compteur (5) et l'unité d'analyse sont disposés à l'extérieur de la zone à mesurer.
